# EUROPÄISCHE PATENTSCHRIFT

(11) **EP 1 949 072 B1**
(45) Veröffentlichungstag und Bekanntmachung des Hinweises auf die Patenterteilung: **25.07.2018**
(21) Anmeldenummer: 06807427.7
(22) Anmeldetag: 20.10.2006
(51) Int. Cl.: G01N 15/06, G01N 27/04, F01N 9/00, F01N 11/00

(54) **SENSORELEMENT FÜR GASSENSOREN UND VERFAHREN ZUM BETRIEB DESSELBEN**
SENSOR ELEMENT FOR GAS SENSORS AND METHOD FOR OPERATING SAID SENSOR ELEMENT
ELEMENT DETECTEUR POUR DETECTEURS DE GAZ ET PROCEDE POUR LEUR UTILISATION

(30) Priorität: 08.11.2005 DE 102005053120
(43) Veröffentlichungstag der Anmeldung: 30.07.2008
(73) Patentinhaber: ROBERT BOSCH GMBH, 70442 Stuttgart (DE)
(72) Erfinder: HEIMANN, Detlef, 70839 Gerlingen (DE); GUENSCHEL, Harald, 96161 Gerach (DE); DORFMUELLER, Lutz, 70839 Gerlingen (DE); SCHMIDT, Ralf, 70839 Gerlingen (DE); SIEBERT, Markus, 71229 Leonberg (DE); DIEHL, Lothar, 70839 Gerlingen (DE); RUTH, Juergen, 70499 Stuttgart (DE); ROESCH, Sabine, 71254 Ditzingen (DE); RODEWALD, Stefan, 71254 Ditzingen (DE); OCHS, Thorsten, 71701 Schwieberdingen (DE); SINDEL, Juergen, 71665 Vaihingen/enz (DE); MARX, Helmut, 73269 Hochdorf (DE); SCHAAK, Andreas, 71642 Ludwigsburg (DE); SCHITTENHELM, Henrik, 70182 Stuttgart (DE); RUNGE, Henrico, 70435 Stuttgart (DE)
(86) Internationale Anmeldenummer: PCT/EP2006/067608
(87) Internationale Veröffentlichungsnummer: WO 2007/054424

(56) Entgegenhaltungen:
- WO-A-2005/093233
- WO-A1-91/01561
- DE-A1- 19 851 966
- DE-B3- 10 331 838
- JP-A- 57 110 948
- US-A- 4 649 364
- US-A- 4 656 832
- US-A1- 2002 118 027
- US-A1- 2003 196 499

## Beschreibung

Die Erfindung geht aus von einem Sensorelement zur Bestimmung von Partikeln in Gasgemischen, einem Gassensor dieses enthaltend, sowie deren Verwendung gemäß der im Oberbegriff der unabhängigen Ansprüche definierten Art.

### Stand der Technik

Um die Funktionstüchtigkeit aktueller in Kraftfahrzeugen eingesetzter Abgasnachbehandlungssysteme zu überprüfen bzw. zu überwachen, werden Sensoren benötigt, mit denen auch im Langzeitbetrieb eine genaue Ermittlung der in einem Verbrennungsabgas vorliegenden Partikelkonzentration ermöglicht werden kann. Darüber hinaus soll mittels derartiger Sensoren eine Beladungsprognose beispielsweise eines in einem Abgassystem vorgesehenen Dieselpartikelfilters ermöglicht werden, um eine hohe Systemsicherheit zu erreichen und dadurch kostengünstigere Filtermaterialien einsetzen zu können.

Aus der DE 10 2005 003118 ist ein Sensor zur Detektion von Partikeln in einem Fluidstrom bekannt, der auf der Basis eines keramischen Mehrlagensubstrats ausgeführt ist. Er umfasst zwei voneinander beabstandete Messelektroden, die dem zu untersuchenden Verbrennungsabgas ausgesetzt sind. Lagert sich zwischen den beiden Messelektroden Ruß ab, so kommt es beim Anlegen einer Spannung an die Messelektroden zu einem Stromfluss zwischen den Messelektroden. Ein schichtförmig ausgeführtes Heizelement ermöglicht es, die Elektroden bzw. deren Umgebung auf thermischem Wege von abgelagerten Rußpartikeln zu befreien. Der Sensor umfasst weiterhin ein Temperaturmesselement, mit dem die Temperatur des Sensors detektiert werden kann. Das Heizelement befindet sich innerhalb des Schichtverbundes des Sensors zwischen dem Temperaturmesselement und den Messelektroden. Nachteilig an diesem Aufbau des Sensors ist, dass herkömmliche Temperaturmesselemente keramischer Sensoren Widerstandsleiterbahnen mit einem erhöhten elektrischen Widerstand aufweisen, die nur durch aufwändige Herstellungsverfahren wie beispielsweise Fotofeinstrukturierungsverfahren erzeugt werden können.

Aus der WO 2005/093233 A1 ist bereits ein Sensorelement für Gassensoren insbesondere zur Bestimmung von Partikeln in Gasgemischen bekannt. Das Sensorelement umfasst des weiteren ein dem zu bestimmenden Gasgemisch ausgesetztes elektrochemisches Messelement mit zwei Messelektroden sowie ein Temperaturmesselement, das an einer beliebigen Stelle im Rußfilterkörper 13 des Partikelfilters angeordnet sein kann.

Aus der US 4,649,364 A ist bereits ein Feuchtigkeitssensor bekannt, der bifunktional auch die Temperatur bestimmen kann. Dabei kann eine erste Elektrode auch als Temperaturmesselement dienen. Das Temperaturmesselement umfasst dabei eine Widerstandsleiterbahn, die einen elektrischen Widerstand von ca. 100 Ohm bei 0°C aufweist.

Ein Feuchtigkeitssensor mit der Möglichkeit zum Messen der Temperatur ist ebenfalls aus der JP 57-110948 A bekannt. Aus der US 2003/0196499 A1 ist bereits ein Partikelsensor bekannt, der zusätzlich zu den Messelektroden ein Heizelement sowie ein Temperaturmesselement aufweist.

Aufgabe der vorliegenden Erfindung ist es, ein Sensorelement für Sensoren und ein Verfahren zur Bestimmung der Konzentration von Partikeln in Gasgemischen bereitzustellen, das eine genaue Temperaturregelung gestattet und dennoch kostengünstig hergestellt werden kann.

### Vorteile der Erfindung

Das Sensorelement, der Gassensor bzw. das Verfahren mit den kennzeichnenden Merkmalen der unabhängigen Ansprüche haben den Vorteil, dass die der Erfindung zugrundeliegende Aufgabe in vorteilhafter Weise gelöst wird. Dies beruht insbesondere darauf, dass auf ein Sensorelement mit einfachem Aufbau zurückgegriffen werden kann, wobei ein in das Sensorelement integriertes Temperaturmesselement in einer besonders kostengünstigen Art und Weise realisiert werden kann.

Da das Temperaturmesselement eine Widerstandsleiterbahn mit relativ geringem elektrischem Widerstand aufweist, kann diese in einfacher Weise erfindungsgemäß mittels der sogenannten Dickschichttechnik auf einem keramischen Substrat des Sensorelementes realisiert werden, während übliche in keramischen Gassensoren realisierte Temperaturmesselemente einen höheren elektrischen Widerstand aufweisen und deren zugrunde liegende Widerstandsleiterbahn aufwändig durch Dünnschichttechnik erzeugt wird.

Weitere vorteilhafte Ausführungsformen des vorliegenden Sensorelementes, Gassensors bzw. Verfahrens zum Betrieb desselben ergeben sich aus den Unteransprüchen.

So ist von Vorteil, wenn das Temperaturmesselement eine Widerstandsleiterbahn umfasst, die durch Brennstrecken überbrückte Leiterbahnbereiche aufweist. Dies ermöglicht einen besonders einfachen Abgleich des Temperaturmesselementes nach dessen Herstellung, da eine Unterbrechung der elektrisch leitfähigen Brennstrecken durch Energiezufuhr zu einer faktischen Verlängerung der Widerstandsleiterbahn und somit zu einer Erhöhung von deren Gesamtwiderstand führt.

Es ist ferner erfindungsgemäß vorgesehen, dass entweder eine der beiden Messelektroden (16) zumindest bereichsweise zusätzlich als Widerstandsleiterbahn des Heizelementes (40) ausgeführt ist und die andere der beiden Messelektroden (14) zumindest bereichsweise zusätzlich als Widerstandsleiterbahn des Temperaturmesselements (30) ausgeführt ist, oder die andere der beiden Messelektroden (14) zumindest bereichsweise zusätzlich als Widerstandsleiterbahn des Temperaturmesselementes (30) und des Heizelementes (40) ausgeführt ist.

Weiterhin ist von Vorteil, wenn eine Auswertevorrichtung vorgesehen ist, die eine Veränderung des zwischen den Messelektroden des Messelementes anliegenden Stromflusses oder elektrischen Widerstandes unter Berücksichtigung der Messtemperatur ermittelt und das Resultat als Maß für eine Partikelkonzentration oder einen Partikelmassenstrom ausgibt.

Das Sensorelement bzw. das Verfahren zum Betrieb desselben ist in vorteilhafter Weise geeignet zur Überwachung der Betriebsweise eines Dieselmotors bzw. zur Überprüfung der Funktionstüchtigkeit oder des Beladungszustands eines Partikelfilters.

### Zeichnung

Vier Ausführungsbeispiele eines erfindungsgemäßen Sensorelementes sind in der Zeichnung schematisch vereinfacht dargestellt und werden in der nachfolgenden Beschreibung näher erläutert. Dabei zeigt
Figur Beispiel eines Sensorelements in einer Explosionsdarstellung,
Figur 2 eine Beschaltung eines in ein Sensorelement gemäß Figur 1 integriertes Temperaturmesselementes,
Figur 3 eine Ausschnittsdarstellung eines Sensorelementes gemäß eines Ausführungsbeispiel in einer Aufsicht,
Figur 4 eine Ausschnittsdarstellung eines Sensorelementes gemäß einer Variante des in Figur 3 dargestellten Ausführungsbeispiels in einer Aufsicht
Figur 5 eine Ausschnittsdarstellung eines Sensorelementes gemäß eines weiteren Ausführungsbeispiels in einer Aufsicht und
Figur 6 eine Ausschnittsdarstellung eines Sensorelementes gemäß eines Ausführungsbeispiel in einer Aufsicht.

### Beschreibung der Ausführungsbeispiele

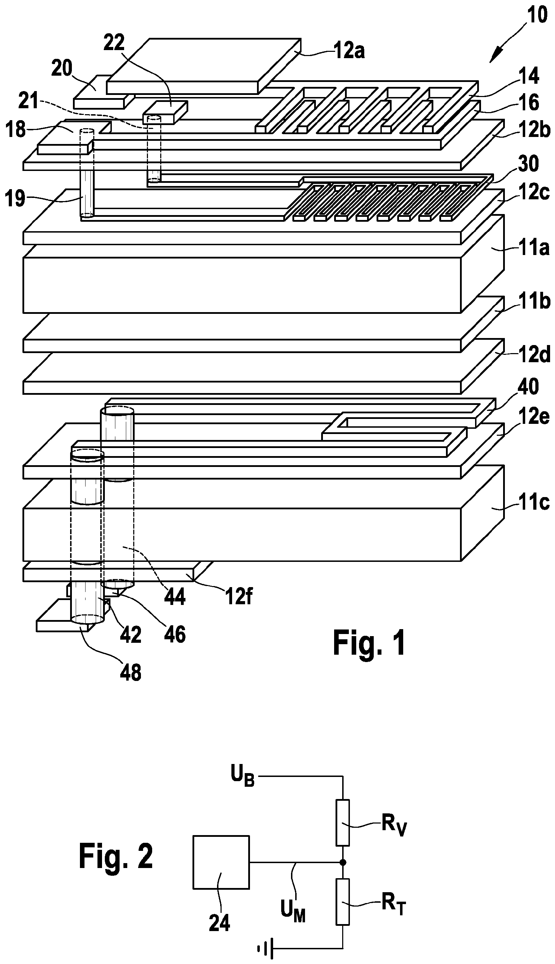

In Figur 1 ist ein prinzipieller Aufbau einer Ausführungsform eines Sensorelements dargestellt. Mit 10 ist ein keramisches Sensorelement bezeichnet, das der Bestimmung von Partikeln, wie beispielsweise Rußpartikeln, in einem das Sensorelement umgebenden Gasgemisch dient. Das Sensorelement 10 umfasst beispielsweise eine Mehrzahl von sauerstoffionenleitenden Festelektrolytschichten 11a, 11b und 11c. Die Festelektrolytschichten 11a und 11c werden dabei als keramische Folien ausgeführt und bilden einen planaren keramischen Körper. Sie bestehen vorzugsweise aus einem sauerstoffionenleitenden Festelektrolytmaterial, wie beispielsweise mit Y₂O₃ stabilisiertem oder teilstabilisiertem ZrO₂.

Die Festelektrolytschicht 11b wird dagegen mittels Siebdruck eines pastösen keramischen Materials beispielsweise auf der Festelektrolytschicht 11a erzeugt. Als keramische Komponente des pastösen Materials wird dabei bevorzugt dasselbe Festelektrolytmaterial verwendet, aus dem auch die Festelektrolytschichten 11a, 11c bestehen.

Weiterhin weist das Sensorelement 10 beispielsweise eine Vielzahl von elektrisch isolierenden keramischen Schichten 12a, 12b, 12c, 12d, 12e und 12f auf. Die Schichten 12a - 12f werden dabei ebenfalls mittels Siebdruck eines pastösen keramischen Materials beispielsweise auf den Festelektrolytschichten 11a, 11c erzeugt. Als keramische Komponente des pastösen Materials wird dabei beispielsweise bariumhaltiges Aluminiumoxid verwendet, da dieses auch bei Temperaturwechselbeanspruchungen über einen langen Zeitraum einen weitgehend konstant hohen elektrischen Widerstand aufweist. Alternativ ist auch die Verwendung von Cerdioxid bzw. der Zusatz anderer Erdalkalioxide möglich.

Die integrierte Form des planaren keramischen Körpers des Sensorelementes 10 wird durch Zusammenlaminieren der mit der Festelektrolytschicht 11b und mit Funktionsschichten sowie den Schichten 12a - 12f bedruckten keramischen Folien und anschließendem Sintern der laminierten Struktur in an sich bekannter Weise hergestellt.

Das Sensorelement 10 weist weiterhin ein keramisches Heizelement 40 auf, das in Form einer elektrischen Widerstandsleiterbahn ausgeführt ist und der Aufheizung des Sensorelementes 10 insbesondere auf die Temperatur des zu bestimmenden Gasgemischs bzw. dem Abbrand der auf den Großflächen des Sensorelementes 10 abgelagerten Rußpartikel dient. Die Widerstandsleiterbahn ist weiterhin vorzugsweise in Form eines Mäanders ausgebildet und weist an beiden Enden Durchkontaktierungen 42, 44 sowie elektrische Kontakte 46, 48 auf. Durch Anlegen einer entsprechenden Heizspannung an die Kontakte 46, 48 der Widerstandsleiterbahn kann die Heizleistung des Heizelementes 40 entsprechend reguliert werden. Die Widerstandsleiterbahn sowie die Kontakte 46, 48 bzw. die Durchkontaktierungen 42, 44 sind vorzugsweise aus einem Cermet-Material ausgeführt; vorzugsweise als Mischung von Platin und/oder einem Platinmetall mit keramischen Anteilen, wie beispielsweise Aluminiumoxid.

Auf einer Großfläche des Sensorelementes 10 sind beispielsweise zwei Messelektroden 14, 16 aufgebracht, die vorzugsweise als ineinander verzahnte Interdigitalelektroden ausgebildet sind und ein elektrochemisches Messelement bilden. Die Verwendung von Interdigitalelektroden als Messelektroden 14, 16 ermöglicht vorteilhafterweise eine besonders genaue Bestimmung des elektrischen Widerstandes bzw. der elektrischen Leitfähigkeit des sich zwischen den Messelektroden 14, 16 befindenden Oberflächenmaterials. Zur Kontaktierung der Messelektroden 14, 16 sind im Bereich eines dem Gasgemisch abgewandten Endes des Sensorelementes Kontakte 18, 20 vorgesehen. Dabei sind die Zuleitungsbereiche der Elektroden 14, 16 vorzugsweise durch die elektrisch isolierende Schicht 12a gegenüber den Einflüssen eines das Sensorelement 10 umgebenden Gasgemischs abgeschirmt. Die Messelektroden 14, 16 weisen beispielsweise einen Elektrodenquerschnitt von 50 bis 150 µm auf. Sie sind, wie beispielsweise auch die Kontakte 18, 20 vorzugsweise aus Platin, Rhodium, einer Platin/Rhodium-Legierung oder einer sonstigen geeigneten elektrisch leitfähigen Legierung ausgeführt. Das Elektrodenmaterial der Messelektroden 14, 16 wird dabei in an sich bekannter Weise als Cermet eingesetzt, um mit den keramischen Folien zu versintern.

Auf der mit den Messelektroden 14, 16 versehenen Großfläche des Sensorelementes 10 kann zusätzlich eine aus Übersichtlichkeitsgründen nicht dargestellte poröse Deck- oder Schutzschicht vorgesehen sein, die die Messelektroden 14, 16 in ihrem ineinander verzahnten Bereich gegenüber einem direkten Kontakt mit dem zu bestimmenden Gasgemisch abschirmt. Dabei ist die Schichtdicke der porösen Schutzschicht vorzugsweise größer als die Schichtdicke der Messelektroden 14, 16. Die poröse Schutzschicht ist vorzugsweise offenporös ausgeführt, wobei die Porengröße so gewählt wird, dass die zu bestimmenden Partikel im Gasgemisch in die Poren der porösen Schutzschicht eindiffundieren können. Die Porengröße der porösen Schutzschicht liegt dabei vorzugsweise in einem Bereich von 2 bis 10 µm. Die poröse Schutzschicht ist aus einem keramischen Material ausgeführt, das vorzugsweise dem Material der Schicht 12a ähnlich ist oder diesem entspricht und kann mittels Siebdruck hergestellt werden. Die Porosität der porösen Schutzschicht kann durch Zusatz von Porenbildnern zu der Siebdruckpaste entsprechend eingestellt werden.

Während des Betriebs des Sensorelementes 10 wird an die Messelektroden 14, 16 eine Spannung angelegt. Da die Messelektroden 14, 16 auf der Oberfläche der elektrisch isolierenden Schicht 12b angeordnet sind, kommt es zunächst im wesentlichen zu keinem Stromfluss zwischen den Messelektroden 14, 16.

Enthält ein das Sensorelement 10 umströmendes Gasgemisch Partikel, insbesondere Ruß, so lagert sich dieser auf der Oberfläche des Sensorelementes 10 ab. Da Ruß eine bestimmte elektrische Leitfähigkeit aufweist, kommt es bei ausreichender Beladung der Oberfläche des Sensorelementes 10 bzw. der porösen Schutzschicht mit Ruß zu einem ansteigenden Stromfluss zwischen den Messelektroden 14, 16, der mit dem Ausmaß der Beladung korreliert.

Wird nun an die Messelektroden 14, 16 eine vorzugsweise konstante Gleich- oder Wechselspannung angelegt und der zwischen den Messelektroden 14, 16 auftretende Stromfluss bzw. der Anstieg des Stromflusses über der Zeit ermittelt, so kann aus dem Stromfluss bzw. aus dem Differentialquotienten des Stromflusses nach der Zeit auf die abgelagerte Partikelmasse bzw. auf den aktuellen Partikelmassenstrom, insbesondere Rußmassenstrom, und auf die Partikelkonzentration im Gasgemisch geschlossen werden. Alternativ kann anstelle des Stromflusses der elektrische Widerstand bzw. die Impedanz zwischen den Messelektroden 14, 16 berücksichtigt werden. Eine Berechnung des Partikelmassenstromes ist auf der Basis der Messwerte möglich, sofern die Strömungsgeschwindigkeit des Gasgemisches bekannt ist. Diese bzw. der Volumenstrom des Gasgemisches kann bspw. mittels eines geeigneten weiteren Sensors bestimmt werden.

Darüber hinaus umfasst das Sensorelement 10 ein Temperaturmesselement 30, das in Form einer elektrischen Widerstandsleiterbahn ausgeführt ist. Die Widerstandsleiterbahn ist beispielsweise aus einem ähnlichen oder dem selben Material ausgeführt, wie die Widerstandsleiterbahn des Heizelementes 40. Die Widerstandsleiterbahn des Temperaturmesselementes 30 ist vorzugsweise in Form eines Mäanders ausgeführt, wobei einer der Anschlüsse der Widerstandsleiterbahn vorzugsweise mit dem Kontakt 18 über eine Durchkontaktierung 19 verbunden ist. Ein weiterer elektrischer Anschluss des Temperaturmesselements 30 ist vorzugsweise mit einem weiteren Kontakt 22 über eine weitere Durchkontaktierung 21 leitend verbunden. Durch Anlegen einer entsprechenden Spannung an die Anschlüsse 18, 22 der Widerstandsleiterbahn und durch Bestimmen des elektrischen Widerstandes derselben kann auf die Temperatur des Sensorelementes 10 geschlossen werden.

Die Widerstandsleiterbahn des Temperaturmesselementes 30 weist dabei einen verhältnismäßig geringen elektrischen Widerstand von bis zu 180 Ohm, insbesondere von 80 bis 120 Ohm bei einer Temperatur von 0°C auf. Üblich ist bei Anwendung in keramischen Gassensoren jedoch die Verwendung von Temperaturmesselementen, deren Widerstandsleiterbahn einen elektrischen Widerstand von mindestens 200 Ohm bei 0°C aufweist. Die Herstellung derartiger Widerstandsleiterbahnen bedingt jedoch spezielle Techniken der Aufbringung des Materials der Widerstandsleiterbahn, wie beispielsweise die sogenannte Dünnschichttechnik, bei der die aufgebrachten Leiterbahnen nachfolgend einer Fotofeinstrukturierung unterzogen werden, um die verhältnismäßig geringen Leiterquerschnitte der Widerstandsleiterbahn realisieren zu können.

Die Verwendung eines Temperaturmesselementes 30, dessen Widerstandsleiterbahn einen elektrischen Widerstand von weniger als 180 Ohm bei 0°C aufweist, erlaubt eine Herstellung der Widerstandsleiterbahn mittels Dickschichttechnik, beispielsweise durch Siebdruck mit einer das Material der Widerstandsleiterbahn enthaltenden Druckpaste. Da auf gleiche Weise die Widerstandsleiterbahn des Heizelementes 40 realisiert werden kann, ergeben sich so weitere Synergieeffekte.

So weist die Widerstandsleiterbahn des Temperaturmesselementes 30 beispielsweise einen Leiterbahnquerschnitt von 100 bis 130 µm auf und/oder einen Abstand der einzelnen Mäanderschleifen der Widerstandsleiterbahn von 110 bis 150 µm.

In Figur 2 ist exemplarisch die Beschaltung eines in das Sensorelement 10 integrierten Temperaturmesselementes 30 dargestellt. Dabei bildet die Widerstandsleiterbahn des Temperaturmesselementes 30 einen Temperaturmesswiderstand R_{T}, der zusammen mit einem Vorwiderstand R_{V} einen Gesamtwiderstand bildet. An diesem liegt als Betriebsspannung beispielsweise eine an der Motorsteuerung anliegende Spannung U_{B} von beispielsweise 5 V an. Der Temperaturmesswiderstand R_{T} und der Vorwiderstand R_{V} bilden einen Spannungsteiler, dessen Ausgangsspannung die Messspannung U_{M} bildet. Die Messspannung U_{M} kann beispielsweise an einen A/D-Wandler 24 geschaltet werden. Die Messspannung U_{M} dient dabei als Maß für den elektrischen Widerstand des Temperaturmesswiderstandes R_{T}. Das mittels dem A/D-Wandler 24 generierte Signal kann beispielsweise einer nicht dargestellten Auswerteeinheit zugeführt werden, die beispielsweise in einen das Sensorelement 10 enthaltenden Gassensor integriert ist. Der Vorwiderstand R_{V} kann ebenfalls Bestandteil der Auswerteeinheit bzw. des Gassensors sein.

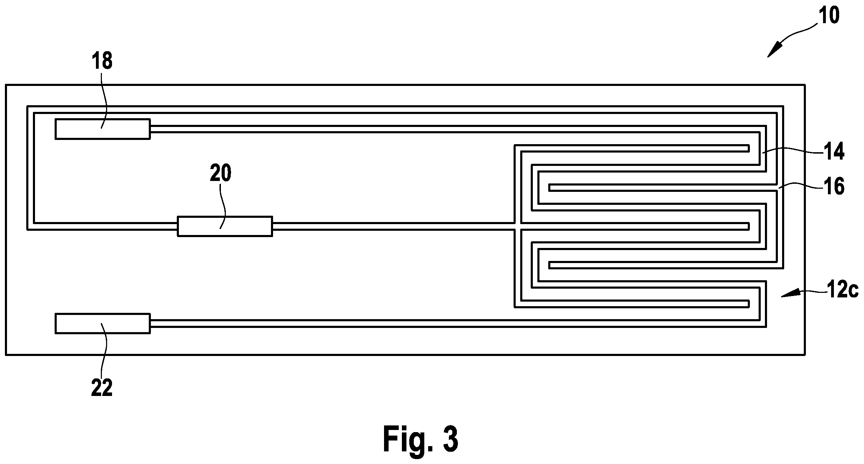

Eine Ausführungsform nach Anspruch 1 ist in Figur 3 dargestellt, wobei gleiche Bezugszeichen gleiche Bauteilkomponenten bezeichnen wie in den Figuren 1 und 2.

Das Sensorelement 10 gemäß zweiter Ausführungsform umfasst eine erste Messelektrode 14, die zumindest teilweise gleichzeitig als Widerstandsleiterbahn des Temperaturmesselementes 30 ausgebildet ist. Dazu weist die erste Messelektrode 14 neben dem Kontakt 18 den weiteren Kontakt 22 auf, wobei zur Bestimmung der Temperatur der elektrische Widerstand zwischen den Kontakten 18, 22 herangezogen wird und zur Bestimmung der Partikelbeladung der elektrische Widerstand zwischen den Kontakten 18, 20. Zusätzlich ist die erste Messelektrode 14 zumindest teilweise gleichzeitig als Widerstandsleiterbahn des Heizelementes 40 ausgebildet. Dazu wird zur Beheizung des Sensorelementes 10 eine Heizspannung an die Kontakte 18, 22 angelegt.

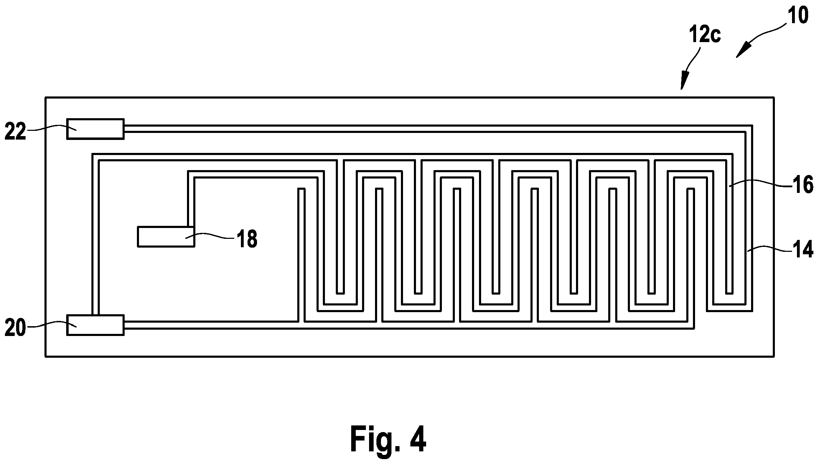

In Figur 4 ist ein Sensorelement gemäß einer Variante des in Figur 3 dargestellten Sensorelementes abgebildet. Dabei bezeichnen weiterhin gleiche Bezugszeichen gleiche Bauteilkomponenten wie in den Figuren 1 bis 3. Dabei ist die Anordnung der aus den Messelektroden 14, 16 gebildeten Mäanderstruktur um 90° gedreht vorgesehen, sodass eine größere Anzahl von Mäanderschleifen auf der keramischen Schicht 12b positionierbar sind.

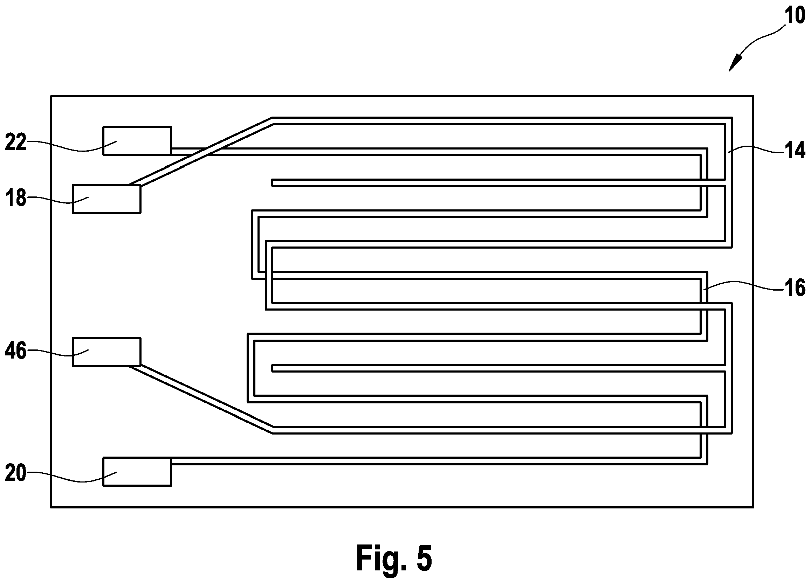

Figur 5 zeigt ein Sensorelement gemäß eines weiteren Ausführungsbeispiels. Dabei bezeichnen weiterhin gleiche Bezugszeichen gleiche Bauteilkomponenten wie in den Figuren 1 bis 4.

Das in Figur 5 abgebildete Sensorelement 10 umfasst Messelektroden 14, 16, die in unterschiedlichen Schichtebenen des Sensorelementes angeordnet sind. Dabei ist beispielsweise die Messelektrode 14 auf einer Großfläche des Sensorelementes 10 vorzugsweise auf der keramischen Schicht 12b vorgesehen, die in diesem Ausführungsbeispiel porös ausgeführt ist und aus Übersichtlichkeitsgründen in Figur 5 nicht dargestellt ist. Die Messelektrode 14 ist durch die Kontakte 18, 46 kontaktiert. In einer weiteren Schichtebene des Sensorelementes 10, vorzugsweise zwischen der keramischen Schichten 12b und einer nicht dargestellten weiteren keramischen Schicht, die zwischen der keramischen Schicht 12b und der Festelektrolytschicht 11a positioniert ist, ist die weitere Messelektrode 16 vorgesehen, die über nicht dargestellte Durchkontaktierungen mit den Kontakten 20, 22 verbunden ist.

Zur Bestimmung von Partikeln in dem zu untersuchenden Gasgemisch wird vorzugsweise ein zwischen den Kontakten 18, 20 auftretender Stromfluss bzw. ein zwischen diesen Kontakten anliegender elektrischer Widerstand der keramischen Schicht 12b bestimmt. Die auf der Großfläche des Sensorelementes 10 angeordnete Messelektrode 14 dient zusätzlich als Widerstandsleiterbahn des Heizelementes 40. Dazu wird an die Kontakte 18, 46 phasenweise eine geeignete Heizspannung angelegt.

Die weitere Messelektrode 16 dient zusätzlich vorzugsweise als Widerstandsleiterbahn des Temperaturmesselementes 30. Dazu wird der elektrische Widerstand der Messelektrode 16 an den Kontakten 20, 22 bestimmt. Alternativ ist es möglich, die erste Messelektrode 14 als Temperaturmesselement 30 auszuführen und die zweite Messelektrode 16 als Heizelement 40 auszuführen. Weiterhin ist es möglich, mehr als eine Zwischenschicht zwischen den Messelektroden 14, 16 vorzusehen.

Eine alternative Betriebsweise der Messelektroden 14, 16 besteht darin, beide in einem ersten Zeitraum als Widerstandsleiterbahn eines Temperaturmesselementes 30 zu betreiben, wobei die Messelektroden 14, 16 dabei vorzugsweise durch leitende Verbindung der Kontakte 22, 46 in Reihe geschaltet werden und der an den Kontakten 18, 20 anliegende elektrische Gesamtwiderstand bestimmt wird. In einem zweiten Zeitraum werden die Messelektroden 14, 16 dann als Heizelemente betrieben, wobei dazu an die Kontakte 18, 46 und 20, 22 jeweils eine geeignete Heizspannung angelegt wird. Die Messelektroden 14, 16 werden entweder in einem dritten Zeitraum zur Messung einer Partikelkonzentration betreiben, wobei ein elektrischer Stromfluss bzw. ein elektrischer Widerstand zwischen den Kontakten 18, 20 bestimmt wird, oder die Messung erfolgt zusätzlich im ersten bzw. zweiten Zeitraum.

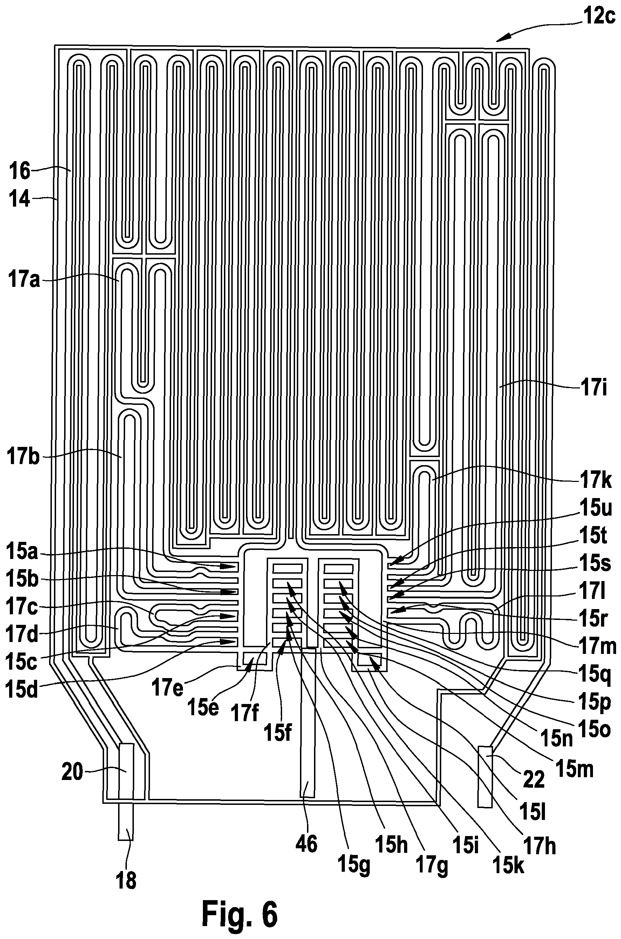

In Figur 6 ist ein Sensorelement gemäß einem weiteren Ausführungsbeispiel dargestellt. Dabei bezeichnen weiterhin gleiche Bezugszeichen gleiche Bauteilkomponenten wie in den Figuren 1 bis 5.

Gemäß dieser Ausführungsform ist die weitere Messelektrode 16 des Sensorelementes 10 gleichzeitig als Widerstandsleiterbahn eines Temperaturmess- und eines Heizelementes 30, 40 ausgeführt. Um den elektrischen Widerstand der als Widerstandsleiterbahn fungierenden weitere Messelektrode 16 genau einstellen zu können, weist diese Mäanderschleifen 17a, 17b, 17c, 17d, 17e, 17f, 17g, 17h, 17i, 17k, 17l, 17m auf, die durch Brennstrecken 15a, 15b, 15c, 15d, 15e, 15f, 15g, 15h, 15i, 15k, 15l, 15m, 15n, 15o, 15p, 15q, 15r, 15s, 15t, 15u überbrückt sind und nach Herstellung des Sensorelementes über eine geeignete Energiezufuhr bei Bedarf weggebrannt bzw. unterbrochen werden können. Auf diese Weise kann durch Verkürzung der Widerstandsleiterbahn eine Anpassung von deren elektrischem Widerstand auf einen gewünschten Wert erfolgen. Die Anzahl und Ausführung der Mäanderschleifen 17a - 17k sowie deren Ausführung hinsichtlich Länge und Querschnitt ist nicht festgelegt und kann modifiziert werden. Gleiches gilt für die Brennstrecken 15a - 15t.

Im Betrieb wird dabei zur Bestimmung von Partikeln im Gasgemisch ein elektrischer Widerstand zwischen Messelektroden 14, 16 an den Kontakten 18, 20 bzw. 18, 22 bestimmt sowie ggf. zusätzlich wird eine Bestimmung der Temperatur mittels einer Widerstandsmessung an den Kontakten 20, 22 durchgeführt oder eine Heizspannung an die Kontakte 20, 46 bzw. 22, 46 angelegt. Um eine ausreichende Heizleistung bereitstellen zu können, kann ein Abschnitt der weiteren Messelektrode 16, wie bspw. der Bereich zwischen den Kontakten 20 und 46 bzw. zwischen den Kontakten 22 und 46, mit einem größeren Leitungsquerschnitt ausgeführt sein oder eine Platin-/Rhodiumlegierung enthalten, sodass ein elektrischer Gesamtwiderstand dieser Elektrodenbereiche von 10 bis 50, insbesondere von 10 Ohm resultiert.

Die vorliegende Erfindung ist nicht auf die in den Figuren 1 bis 6 dargestellten Ausführungsformen eines Sensorelementes beschränkt, sondern es können zahlreiche Abwandlungen dieses Sensorelementes vorgenommen werden. So ist es beispielsweise möglich, zusätzliche keramische Schichten im Sensorelement vorzusehen oder den Mehrschichtaufbau des Sensorelementes anwendungsbezogen zu vereinfachen, sowie weitere Messelektroden vorzusehen. Auch die Verwendung mehrerer Heiz- und Temperaturmesselemente ist möglich.

Die Anwendung des beschriebenen Sensorelementes ist nicht auf die Bestimmung von Rußpartikeln in Abgasen von Verbrennungsmotoren beschränkt, sondern es kann allgemein zur Bestimmung der Konzentration von Partikeln, die die elektrische Leitfähigkeit eines keramischen Substrats bei Einlagerung verändern, beispielsweise in chemischen Herstellungsprozessen oder Abluftnachbehandlungsanlagen, eingesetzt werden. Weiterhin kann die Erfindung auf alle keramischen Sensorelemente übertragen werden, die der Bestimmung von Gasen in Gasgemischen dienen und ein integriertes Temperaturmesselement aufweisen, wie Sauerstoff-, Stickoxid- und Ammoniaksensoren.

## Patentansprüche

1. Sensorelement für Gassensoren zur Bestimmung von Partikeln in Gasgemischen, mit mindestens einem dem zu bestimmenden Gasgemisch aussetzbaren resistiven Messelement mit zwei Messelektroden (14, 16) und mindestens einem in das Sensorelement integrierten Temperaturmesselement (30), wobei in dem Sensorelement ein Heizelement (40) vorgesehen ist, **dadurch gekennzeichnet, dass** entweder eine der beiden Messelektroden (16) zumindest bereichsweise zusätzlich als Widerstandsleiterbahn des Heizelementes (40) ausgeführt ist und die andere der beiden Messelektroden (14) zumindest bereichsweise zusätzlich als Widerstandsleiterbahn des Temperaturmesselements (30) ausgeführt ist, oder eine der beiden Messelektroden (14) zumindest bereichsweise zusätzlich als Widerstandsleiterbahn des Temperaturmesselementes (30) und des Heizelementes (40) ausgeführt ist, und dass in beiden Fällen die Widerstandsleiterbahn des Temperaturmesselements (30) einen elektrischen Widerstand von weniger als 180 Ohm bei 0°C aufweist und mittels Dickschichttechnik auf einem keramischen Substrat des Sensorelements realisiert ist.

2. Sensorelement nach Anspruch 1, **dadurch gekennzeichnet, dass** die Widerstandsleiterbahn des Temperaturmesselementes (30) durch Brennstrecken (15a - 15u) überbrückte Leiterbahnbereiche (17a - 17k) aufweist.

3. Sensorelement nach einem der Anspruch 1 oder 2, **dadurch gekennzeichnet, dass** die Messelektroden (14, 16) als Interdigitalelektroden ausgeführt sind.

4. Sensorelement nach einem der vorhergehenden Ansprüche, **dadurch gekennzeichnet, dass** die Messelektroden (14, 16) in unterschiedlichen Schichtebenen (12c, 12d) des Sensorelementes angeordnet sind.

5. Gassensor zur Bestimmung von Partikeln in Gasgemischen, insbesondere Rußsensor, mit einem Sensorelement nach einem der Ansprüche 1 bis 5, **dadurch gekennzeichnet, dass** eine Auswerteeinheit enthalten ist, in der eine Korrelation zwischen einer herrschenden Messtemperatur und einem mittels dem Sensorelement zwischen Messelektroden (14, 16) des Sensorelementes bestimmten Stromfluss oder elektrischen Widerstand in Abhängigkeit von der Partikelbeladung hinterlegt ist.

6. Verwendung eines Sensorelementes nach einem der Ansprüche 1 bis 5 oder eines Gassensors nach Anspruch 6 zur Überwachung der Betriebsweise eines Dieselmotors oder der Funktionstüchtigkeit und/oder des Beladungszustands eines Partikelfilters.

## Claims

1. Sensor element for gas sensors for determining particles in gas mixtures, with at least one resistive measuring element which can be exposed to the gas mixture to be determined and has two measuring electrodes (14, 16) and at least one temperature measuring element (30) integrated in the sensor element, a heating element (40) being provided in the sensor element, **characterized in that** either one of the two measuring electrodes (16) is additionally configured at least in certain regions as a resistance conductor track of the heating element (40) and the other of the two measuring electrodes (14) is additionally configured at least in certain regions as a resistance conductor track of the temperature measuring element (30), or one of the two measuring electrodes (14) is additionally configured at least in certain regions as a resistance conductor track of the temperature measuring element (30) and of the heating element (40), and **in that** in both cases the resistance conductor track of the temperature measuring element (30) has an electrical resistance of less than 180 ohms at 0°C and is realized by means of thick-film technology on a ceramic substrate of the sensor element.

2. Sensor element according to Claim 1, **characterized in that** the resistance conductor track of the temperature measuring element (30) has conductor track regions (17a-17k) bridged by the fusible links (15a-15u).

3. Sensor element according to either of Claims 1 and 2, **characterized in that** the measuring electrodes (14, 16) are configured as interdigital electrodes.

4. Sensor element according to one of the preceding claims, **characterized in that** the measuring electrodes (14, 16) are arranged in different layer planes (12c, 12d) of the sensor element.

5. Gas sensor for determining particles in gas mixtures, in particular a particulate sensor, with a sensor element according to one of Claims 1 to 5, **characterized in that** it includes an evaluation unit, in which a correlation between a prevailing measuring temperature and a current flow or electrical resistance determined by means of the sensor element between measuring electrodes (14, 16) of the sensor element in dependence on the particle loading is stored.

6. Use of a sensor element according to one of Claims 1 to 5 or of a gas sensor according to Claim 6 for monitoring the operation of a diesel engine or the functional capability and/or the loading state of a particle filter.

## Revendications

1. Elément capteur pour capteurs de gaz destinés à déterminer la présence de particules dans des mélanges de gaz, comportant au moins un élément de mesure résistif pouvant être exposé au mélange de gaz à déterminer, deux électrodes de mesure (14, 16) et au moins un élément de mesure de température (30) intégré dans l'élément capteur, dans lequel un élément chauffant (40) est prévu dans l'élément capteur, **caractérisé en ce que** l'une des deux électrodes de mesure (16) est en outre conçue au moins par zones sous la forme d'un trajet conducteur résistif de l'élément chauffant (40) et l'autre des deux électrodes de mesure (14) est en outre conçue au moins par zones sous la forme d'un trajet conducteur résistif de l'élément de mesure de température (30), ou l'une des deux électrodes de mesure (14) est en outre conçue au moins par zones sous la forme d'un trajet conducteur résistif de l'élément de mesure de température (30) et de l'élément chauffant (40), et dans les deux cas, le trajet conducteur résistif de l'élément de mesure de température (30) présente une résistance électrique inférieure à 180 ohms à 0°C et est réalisé sur un substrat céramique de l'élément capteur au moyen d'une technologie à couche épaisse.

2. Elément capteur selon la revendication 1, **caractérisé en ce que** le trajet conducteur résistif de l'élément de mesure de température (30) présente des zones de trajet conducteur (17a - 17k) surmontées par des trajets de combustion (15a - 15u).

3. Elément capteur selon l'une des revendications 1 ou 2, **caractérisé en ce que** les électrodes de mesure (14, 16) sont conçues sous la forme d'électrodes interdigitées.

4. Elément capteur selon l'une des revendications précédentes, **caractérisé en ce que** les électrodes de mesure (14, 16) sont disposées dans différents plans de couches (12c, 12d) de l'élément capteur.

5. Capteur de gaz destiné à déterminer la présence de particules dans des mélanges de gaz, en particulier un capteur de suie, comportant un élément capteur selon l'une des revendications 1 à 5, **caractérisé en ce qu'**il comporte une unité d'évaluation dans laquelle est stockée une corrélation entre une température de mesure dominante et un courant ou une résistance électrique déterminée entre les électrodes de mesure (14, 16) de l'élément capteur en fonction de la charge de particules au moyen de l'élément capteur.

6. Utilisation d'un élément capteur selon l'une quelconque des revendications 1 à 5 ou d'un capteur de gaz selon la revendication 5 pour surveiller le fonctionnement d'un moteur diesel ou le fonctionnement et/ou l'état de charge d'un filtre à particules.
